# FASCICULE DE BREVET EUROPEEN

(11) **EP 1 125 782 B1**
(45) Date de publication et mention de la délivrance du brevet: **26.05.2004**
(21) Numéro de dépôt: 01400239.8
(22) Date de dépôt: 31.01.2001
(51) Int. Cl.: B60K 17/356, B60K 7/00

(54) **Transmission hydrostatique pour véhicules à quatre roues motrices notamment pour tracteurs agricoles**
Hydrostatischer Antrieb für Fahrzeuge mit Allradantrieb insbesondere für Ackerschlepper
Hydrostatic transmission for four wheel drive vehicles especially for agricultural tractors

(30) Priorité: 02.02.2000 FR 0001325
(43) Date de publication de la demande: 22.08.2001
(73) Titulaire: Etablissements Bobard Jeune, 21200 Beaune (FR)
(72) Inventeur: Chaffiol, Denis, 71400 Curgy (FR); Thomas, Dominique, 71200 Le Creusot (FR)
(74) Mandataire: Loyer, Bertrand

(56) Documents cités:
- FR-A- 2 709 454
- US-A- 4 185 713
- US-A- 5 420 791

## Description

Il est connu, pour les tracteurs agricoles, par exemple, d'entraîner les quatre roues du tracteur au moyen d'une transmission hydrostatique c'est-à-dire au moyen d'une pompe hydraulique entraînant des moteurs hydrauliques, chaque roue étant équipée d'un moteur hydraulique.

En particulier dans le brevet FR 2 709 454 au nom du même demandeur, qui est considéré l'état de la technique la plus proche, on a décrit une transmission hydraulique pour un tracteur à quatre roues motrices dans lequel les moteurs hydrauliques sont alimentés par un circuit en boucle fermée, les moteurs hydrauliques des roues d'un même côté étant alimentés par une même canalisation, le moteur de la roue avant étant alimenté par le liquide ayant traversé le moteur de la roue arrière, la canalisation de retour à la pompe étant commune.

Les moteurs tournent donc tous ensemble à la même vitesse, d'où la nécessité, comme cela est décrit dans ledit brevet FR 2 709 454 de disposer des moyens qui modifient, lorsque le véhicule est en virage, le circuit d'alimentation ou de retour d'une des roues directrices.

Dans le brevet US 5.420.791, on a décrit un dispositif de synchronisation comportant une régulation électronique de l'alimentation du train avant. Un tel dispositif est beaucoup trop onéreux et donc inutilisable, pour un simple tracteur agricole.

Dans les dispositifs connus, et notamment dans les tracteurs agricoles à quatre roues motrices du type de celui décrit dans le brevet susmentionné FR 2 709 454 ont emploie soit des moteurs hydrauliques lents, soit des moteurs hydrauliques rapides.

Dans le cas du moteur lent un tour moteur est égal à un tour de roue ; dans le cas du moteur rapide, on dispose un réducteur entre le moteur et la roue, de façon qu'il faille plusieurs tours moteur pour un tour de roue.

L'inconvénient d'une transmission à moteurs lents est que ceux-ci limitent souvent la vitesse du tracteur lors des déplacements sur route car ils n'acceptent pas des vitesses de rotation élevées.

L'inconvénient d'une transmission à moteurs rapides est que les moteurs des roues avant sont surdimensionnés ; ainsi lorsque le tracteur est utilisé avec seulement les deux roues motrices (2x4), les réducteurs et les moteurs hydrauliques tournent à grande vitesse en brassant de l'huile et donc en absorbant inutilement de l'énergie. De plus ces moteurs trop encombrants empêchent de monter des roues avant de petit diamètre, cela limite la vitesse de rotation des roues avant quand elles sont de diamètre inférieur à celui des roues arrière.

De plus il faut que tous les moteurs soient des moteurs à vitesse variable ce qui est cher.

Le but de la présente invention est d'éliminer tous ces inconvénients d'une façon très simple et donc très économique.

Le résultat est obtenu en disposant pour les roues avant des moteurs hydrauliques qui soient : d'une part des moteurs lents et d'autre part des moteurs débrayables.

La transmission hydrostatique selon l'invention est caractérisée par le fait qu'elle comporte pour l'entraînement des roues avant des moteurs lents débrayables.

La présente invention peut également comporter les dispositions suivantes :
la transmission hydrostatique comporte des moteurs lents à l'avant et à l'arrière, les moteurs avant étant débrayables ;
la transmission hydrostatique est mixte c'est-à-dire qu'elle comporte des moteurs lents débrayables à l'avant et des moteurs rapides avec réducteurs pour les roues arrière ;
les moteurs rapides sont des moteurs à cylindrée variable ; alors que les moteurs lents sont à cylindre fixe ;
d) le rapport entre le diamètre des roues arrière et avant et le rapport de réduction de la vitesse de rotation des roues arrière par rapport à celle de leur moteur sont déterminés en fonction l'un de l'autre de façon que les vitesses d'avancement des roues avant et arrière correspondent.

A titre d'exemple non limitatif pour faciliter la compréhension de l'invention on a représenté aux dessins annexés :
Figure 1 : le schéma hydraulique d'une transmission hydrostatique mixte selon la présente invention ;
Figure 2 : un schéma illustrant un moteur hydraulique lent débrayable.

La transmission hydrostatique selon l'invention est dite "mixte" pour illustrer le fait qu'elle comporte à la fois des moteurs rapides avec réducteurs pour les roues arrière et des moteurs lents pour les roues avant.

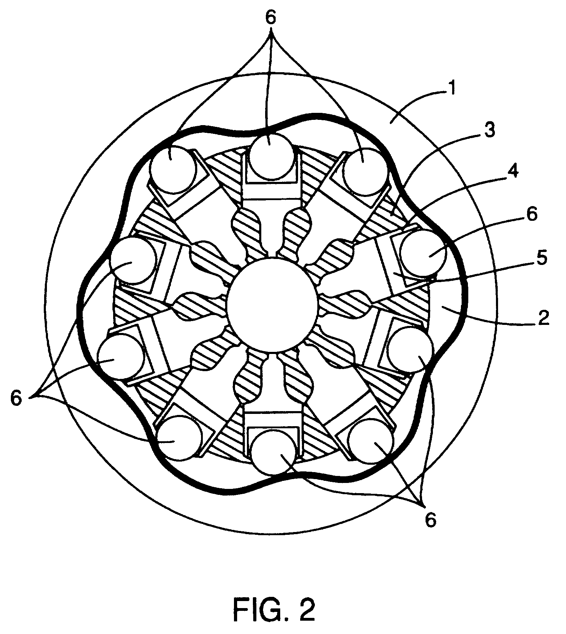

La figure 2 illustre un moteur lent débrayable de type connu, analogue à celui qui est décrit dans le brevet US 5.420.791.

Ce moteur comporte un carter 1 dont la paroi interne est munie d'ondulations qui définissent une pluralité d'alvéoles 2, six dans l'exemple représenté. A l'intérieur du carter 1 est disposé une pièce cylindrique 3, dans laquelle sont creusés une pluralité de cylindres radiaux 4 (dix dans l'exemple représenté). Dans chaque cylindre 4 coulisse un piston 5 muni à son extrémité d'une bille 6 qui roule sur la paroi 2. Lorsque les cylindres 4 sont alimentés en huile de façon séquentielle, les pistons 5, en exerçant, par l'intermédiaire des billes 6, une pression sur les pentes des alvéoles 2 qui constituent des cames ce qui fait tourner la pièce 3, fixée à la roue, le carter 1 étant fixe. Ce genre de moteur hydraulique, connu en soi, est un moteur lent à cylindrée fixe.

Ce type de moteur est débrayable c'est-à-dire que lorsque l'on interrompt l'alimentation des cylindres 4, tout en maintenant une faible pression, de l'ordre de 1 bar, à l'intérieur du carter 1, tous les pistons 5 sont repoussés à l'intérieur de leurs cylindres 4 par cette pression résiduelle et le carter 1 peut tourner librement, sans brasser du liquide hydraulique.

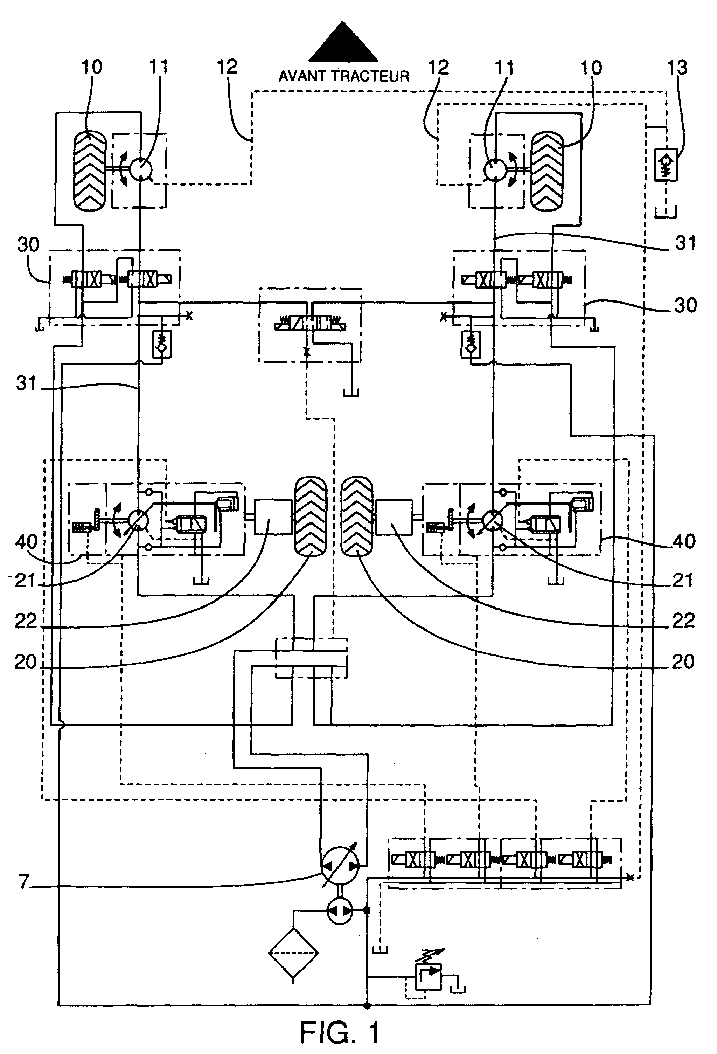

En se reportant à la figure 1 on voit que la transmission hydrostatique selon l'invention comporte une pompe à débit variable 7, entraînée par le moteur du tracteur, qui alimente en parallèle les moteurs 21 et 11 des roues 20 et 10 droite et gauche.

Comme cela est connu en soi, les moteurs hydrauliques d'un même côté sont montés en série, c'est-à-dire que le moteur hydraulique 11 de la roue avant droite 10 reçoit le liquide hydraulique qui a traversé le moteur hydraulique 21 de la roue arrière droite 20 (et symétriquement pour le côté gauche).

Chaque moteur hydraulique 21 est un moteur rapide, à cylindrée variable. Le moteur 21 étant un moteur rapide est relié à la roue arrière 20 par un réducteur 22.

La roue avant 10 est entraînée par un moteur lent 11, identique à celui décrit plus haut en relation avec la figure 2, c'est-à-dire, que c'est un moteur lent, débrayable et à cylindrée fixe. Comme c'est un moteur lent il n'y a pas de réducteur entre le moteur 11 et la roue 10 et donc à chaque tour du moteur 11 correspond un tour de la roue 10.

Un système de valves 30 est disposé sur la conduite hydraulique 31 allant du moteur rapide 21 au moteur lent 11, de façon à pouvoir couper l'alimentation dudit moteur 11.

Une conduite 12 allant de l'intérieur du carter 1 de chaque moteur 11 comporte un clapet anti-retour 13 taré à environ 1 bar.

En fonctionnement 4x4 les deux moteurs 21 et 11 d'un même côté sont alimentés de sorte que les roues 20 et 10 soient motrices : la conduite 12 est maintenue à la pression de 1 bar.

Les diamètres des roues 20 et 10, les caractéristiques du réducteur 22 et la cylindrée du moteur lent 11 sont calculés pour que, en fonctionnement correspondant aux travaux les plus usuels, les vitesses d'avancement des roues 10 et 20 soient les mêmes. On peut d'ailleurs en agissant sur la commande de variation de cylindrée des moteurs 21 ajuster l'une à l'autre les vitesses des roues 20 et 10.

Pour le fonctionnement en 2x4, c'est-à-dire avec seules les roues arrière 20 motrices l'alimentation des moteurs hydrauliques lents 11 est coupée au moyen des valves 30. La pression hydraulique dans les deux canalisations 12 est piégée entre le clapet anti-retour 13 et les valves 30 (à travers les moteurs 11) de sorte que les pistons 5 demeurent enfoncés dans leurs cylindres 4 et cela même sous l'effet de la force centrifuge ; de sorte qu'il n'y a aucun brassage d'huile dans les moteurs lents 11, les roues 10 tournent alors en roue libre et cela permet au tracteur d'aller beaucoup plus vite sur route.

La présente invention n'est pas applicable uniquement aux tracteurs agricoles, elle peut être employée sur tout véhicules pour lesquels il est nécessaire d'avoir soit une transmission 4x4 soit une transmission 2x4.

Comme cela a été dit plus haut la présente invention n'est pas limitée aux transmissions avec moteurs rapides à l'arrière : des moteurs lents à l'arrière peuvent être employés à condition que les moteurs lents avant soient débrayables.

## Revendications

1. Transmission hydrostatique pour véhicules à quatre roues motrices du type dans laquelle les moteurs hydrauliques (11, 21) des roues (10, 20) d'un même côté sont alimentés en série où les roues avant sont entraînées par des moteurs lents (11); **caractérisée par le fait que** lesdits moteurs lents sont débrayables et en ce que le rapport entre le diamètre des roues arrière et avant et le rapport de réduction de la vitesse de rotation des roues arrière par rapport à celle de leur moteur sont déterminés en fonction l'un de l'autre de façon que les vitesses d'avancement des roues avant et arrière correspondent.

2. Transmission selon la revendication 1 dans laquelle les moteurs arrière (21) sont également des moteurs lents.

3. Transmission selon la revendication 1 dans laquelle les moteurs arrière (21) sont des moteurs rapides munis de réducteurs (22).

4. Transmission selon la revendication 2 dans laquelle les moteurs lents (11) sont du type constitué par un carter (1) à alvéoles (2) sur les parois desquelles prennent appui des pistons (5), lesdits carters (1) étant reliés à une conduite (12) comprenant un clapet taré (13) de façon à pouvoir être maintenus en pression lorsque l'alimentation du moteur est coupée ce qui repousse les pistons (5) dans leur cylindre (4) et permet à la roue (10) de tourner en roue libre.

5. Transmission selon la revendication 3 dans laquelle les moteurs rapides (21) sont à cylindrée variable.

6. Transmission selon l'une quelconque des revendications précédentes dans laquelle la conduite hydraulique (31) reliant le moteur rapide (21) au moteur lent (11) comporte un ensemble de valves (30) qui permet d'annuler l'alimentation du moteur lent (11).

## Patentansprüche

1. Hydrostatischer Antrieb für Fahrzeuge mit Vierradantrieb der Art, bei der die Hydraulikmotoren (11, 21) für die Räder (10, 20) ein- und derselben Seite in Reihe versorgt werden, wobei die Vorderräder von langsamen Motoren (11) angetrieben werden, **dadurch gekennzeichnet, daß** die langsamen Motoren ausschaltbar sind und daß das Verhältnis zwischen dem Durchmesser der Hinterräder und der Vorderräder und das Untersetzungsverhältnis der Drehgeschwindigkeit der Hinterräder relativ zu der ihres Motors abhängig voneinander so bestimmt sind, daß die Fortbewegungsgeschwindigkeiten der Vorderund Hinterräder einander entsprechen.

2. Antrieb nach Anspruch 1, bei dem die hinteren Motoren (21) ebenfalls langsame Motoren sind.

3. Antrieb nach Anspruch 1, bei dem die hinteren Motoren (21) schnelle, mit Untersetzungsgetrieben (22) versehene Motoren sind.

4. Antrieb nach Anspruch 2, bei dem die langsamen Motoren (11) von der Art sind, die aus einem Gehäuse (1) mit Hohlräumen (2) besteht, an deren Wänden Kolben (5) zur Anlage kommen, wobei die Gehäuse (1) mit einer Leitung (12) verbunden sind, die ein geeichtes Ventil (13) derart umfaßt, daß sie unter Druck gehalten werden können, wenn die Versorgung des Motors unterbrochen wird, wodurch die Kolben (5) in ihren Zylinder (4) zurückgeschoben werden und das Rad (10) sich im Freilauf drehen kann.

5. Antrieb nach Anspruch 3, bei dem die schnellen Motoren (21) einen veränderlichen Hubraum aufweisen.

6. Antrieb nach einem der vorhergehenden Ansprüche, bei dem die Hydraulikleitung (31), welche den schnellen Motor (21) mit dem langsamen Motor (11) verbindet, eine Anordnung von Ventilen (30) aufweist, die es gestattet, die Versorgung des langsamen Motors (11) zu unterbrechen.

## Claims

1. A hydrostatic transmission for vehicles having four driving wheels, of the type in which the hydraulic motors (11, 21) of the wheels (10, 20) on the same side are powered in series or the front wheels are driven by low-speed motors (11), **characterised by** the fact that said low-speed motors are disengageable and in that the ratio between the diameter of the rear and front wheels and the reduction ratio of the speed of rotation of the rear wheels relative to that of their motor are determined as a function of one another such that the ground speeds of the front and rear wheels correspond.

2. A transmission according to Claim 1, in which the rear motors (21) are also low-speed motors.

3. A transmission according to Claim 1, in which the rear motors (21) are high-speed motors provided with reducing gears (22).

4. A transmission according to Claim 2, in which the low-speed motors (11) are of the type formed by a crankcase (1) having cells (2) on the walls of which pistons (5) bear, said crankcases (1) being connected to a line (12) comprising a regulator valve (13) so that they can be kept under pressure when the power supply to the motor is cut, which forces the pistons (5) back into their cylinder (4) and enables the wheel (10) to turn freely.

5. A transmission according to Claim 3, in which the high-speed motors (21) are of variable cubic capacity.

6. A transmission according to any one of the preceding claims, in which the hydraulic line (31) connecting the high-speed motor (21) to the low-speed motor (11) comprises a set of valves (30) which makes it possible to cancel out the power supply to the low-speed motor (11).
